# FASCICULE DE BREVET EUROPEEN

(11) **EP 3 396 817 B1**
(45) Date de publication et mention de la délivrance du brevet: **05.08.2020**
(21) Numéro de dépôt: 18166113.3
(22) Date de dépôt: 06.04.2018
(51) Int. Cl.: H02K 7/106

(54) **MOTORÉDUCTEUR À FREINAGE MAGNÉTIQUE**
GETRIEBEMOTOR MIT EINER MAGNETISCHEN BREMSEINRICHTUNG
GEAR MOTOR WITH MAGNETIC BRAKE

(30) Priorité: 25.04.2017 FR 1753546
(43) Date de publication de la demande: 31.10.2018
(73) Titulaire: Unicum Transmission de Puissance, 42150 La Ricamarie (FR)
(72) Inventeur: FAURIAUX, Samuel, 94370 Sucy en Brie (FR)
(74) Mandataire: Cabinet Laurent & Charras

(56) Documents cités:
- CN-A- 1 945 946
- DE-U1- 20 315 609
- FR-A1- 2 884 269
- FR-A1- 2 929 771
- FR-A1- 3 031 248

## Description

L'invention concerne un motoréducteur à freinage magnétique.

L'invention se rattache au secteur technique des axes ou arbres motorisés, du type moto- réducteur, permettant l'enroulement et le déroulement des volets de couverture des bassins de piscines.
L'invention trouve une application particulière dans tous les cas où il est nécessaire de connaître la position d'un axe motorisé, et de le maintenir dans la position considérée.

Plus particulièrement, l'invention concerne une solution du type de celle définie dans le brevet FR 2 929 771, dont le Demandeur de la présente est également titulaire.
Ce brevet concerne un dispositif de freinage magnétique et d'arrêt en rotation d'un axe motorisé, au moyen de zones aimantées, disposées au niveau de l'axe et au niveau d'un carter, dans lequel est monté tournant ledit axe, l'ensemble constituant un motoréducteur.
Selon l'enseignement de ce document, le carter est agencé à une extrémité transversale, avec une bride dont une face transversale reçoit une pluralité des zones aimantées susceptibles d'être en regard de polarités, avec une pluralité de zones aimantées complémentaires, portées par une couronne ou rondelle solidarisée à l'axe motorisé.
Les différentes zones aimantées présentent un entrefer de l'ordre de 0.5 mm.

Les zones magnétiques sont constituées par des aimants disposés axialement à l'arbre motorisé, de sorte qu'ils exercent une force d'immobilisation radiale, avec une contrainte axiale.
Cette composante de poussée axiale, tend à réduire l'efficacité du fonctionnement en vue de l'immobilisation du motoréducteur avec, par exemple pour objectif, d'empêcher le déroulement d'un tambour d'une couverture de piscine.
Les documents FR3031248 et FR2884269 décrivent des exemples de moto réducteurs selon le préambule de la revendication 1.
L'invention s'est fixée pour but de remédier à ces inconvénients d'une manière simple, sûre, efficace et rationnelle.

Le problème que se propose de résoudre l'invention, est d'éviter d'avoir une composante de poussée axiale, avec pour objectif le maintien et l'arrêt de l'axe moteur avec un couple de même valeur que celui du moteur, après avoir coupé l'alimentation électrique.

Pour résoudre un tel problème, il a été conçu et mis en au point un moto réducteur à freinage magnétique, du type de ceux comprenant un arbre monté tournant dans une carcasse tubulaire fixe, au moyen de deux paliers montés dans deux flasques solidaires de chaque extrémité transversale de ladite carcasse.
Selon l'invention, au moins l'un des flasques est agencé directement, ou d'une manière rapportée, pour constituer une bride ou couronne circulaire disposée concentriquement à l'arbre, et présentant périphériquement des aimants orientés radialement par rapport audit arbre, lesdits aimants étant aptes à coopérer avec des aimants orientés également radialement par rapport à l'arbre, et portés périphériquement par un organe support solidaire dudit arbre.

Il résulte de ces caractéristiques que la disposition radiale des aimants évite d'avoir une composante de poussée axiale, avec les inconvénients en résultant.

Selon une autre caractéristique, les aimants sont disposés en opposition des pôles. A partir de cette conception :
- soit les pôles nord des aimants supportés par la bride s'opposent aux pôles nord des aimants que présente le support porté par l'arbre,
- soit les pôles sud des aimants supportés par la bride s'opposent aux pôles sud des aimants que présente le support porté par l'arbre.

Selon d'autres caractéristiques :
- les aimants de la bride et du support sont régulièrement décalés angulairement sur une circonférence.
- le nombre d'aimants de la bride est supérieur au nombre d'aimants du support.
- Dans un exemple de réalisation, le nombre d'aimants de la bride est deux fois supérieur au nombre d'aimants du support, ce qui n'est pas obligatoire. Ce système peut fonctionner avec un nombre d'aimants très supérieur selon la force de maintien en position recherchée.
- Dans le cas présent la bride présente six aimants décalés de 60°, tandis que le support présente trois aimants décalés de 120°.
- Dans la forme de réalisation illustrée, le support a une forme géométrique globalement triangulaire, sans pour cela exclure d'autres formes géométriques.

Comme indiqué, l'invention trouve une application avantageuse dans le cas d'un tambour d'enroulement de volets de couverture d'un bassin de piscine.

L'invention est exposée ci-après plus en détail à l'aide des figures des dessins annexés, dans lesquels :

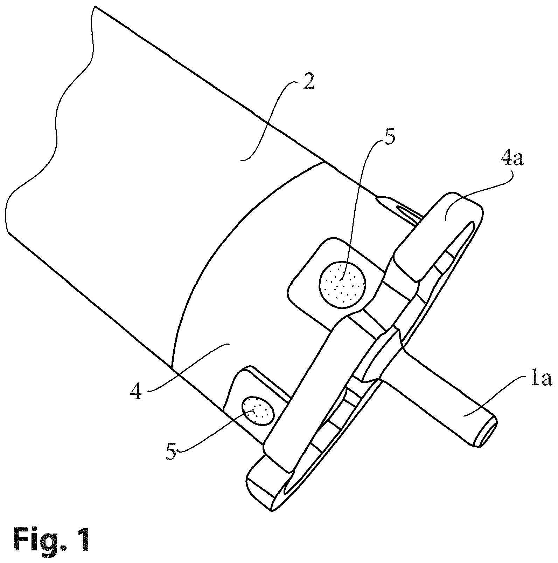

- la figure 1 est une vue partielle en perspective du motoréducteur,

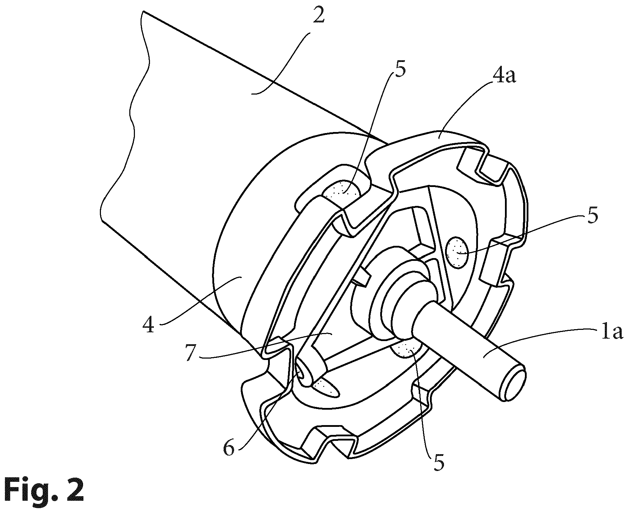

- la figure 2 est une autre vue partielle du motoréducteur ; on note plus particulièrement la disposition des aimants, notamment au niveau des flasques de la carcasse et du support rendu solidaire de l'axe motorisé,

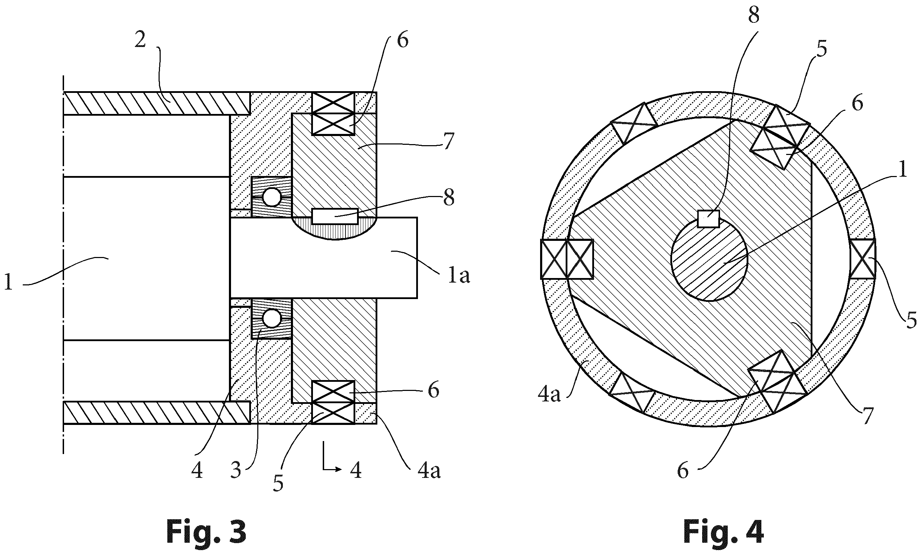

- la figure 3 est une vue en coupe longitudinale d'un exemple de réalisation d'un motoréducteur, illustré à caractère schématique et montrant plus particulièrement le positionnement des aimants,
- la figure 4 est une vue en coupe transversale, considérée selon la ligne 4-4 de la figure 3.

De manière parfaitement connu, le motoréducteur à freinage magnétique comprend un arbre motorisé (1), monté tournant dans une carcasse tubulaire fixe (2), au moyen par exemple, de paliers (3) solidaires d'un flasque (4) fixé à chacune des extrémités transversales de la carcasse (2).
Cette conception du motoréducteur en tant que telle, n'est pas décrite plus en détail, car parfaitement connue pour un homme du métier, et susceptible de faire l'objet de différentes variantes d'exécution.

Comme indiqué, le but recherché est le maintien à l'arrêt de l'arbre motorisé (1), avec un couple de même valeur que celui du moteur, après avoir coupé l'alimentation électrique.
Selon l'invention, au moins l'un des flasques (4) est agencé directement, ou d'une manière rapportée, pour constituer une bride ou couronne circulaire (4a), disposée concentriquement à l'arbre (1), et plus particulièrement dans l'exemple illustré, concentriquement à une portée circulaire (1a) de l'arbre (1) montée tournante dans les paliers (3).
Cette bride ou couronne (4a) présente périphériquement des aimants (5) orientés radialement par rapport à l'arbre motorisé (1).
Ces aimants (5) sont aptes à coopérer avec des aimants (6), également orientés radialement par rapport à l'arbre motorisé (1).
Les aimants (6) sont portés périphériquement par un organe support (7) rendu solidaire de l'arbre (1).
Par exemple, le support (7) est engagé concentriquement sur la portée (1a) de l'arbre (1), en étant accouplé audit arbre au moyen d'une clavette (8).

Chacun des aimants (5) et (6) est constitué par une pastille cylindrique, réalisée par exemple en néo-dyme-fer-bore, sélectionnée pour exercer une force d'attraction adaptée aux obligations envisagées.

Par exemple, les aimants (5) sont fixés dans des ouvertures débouchantes formées dans l'épaisseur de la couronne (4a). La fixation s'effectue par tous moyens connus, tels que collage. Après fixation, une des faces des aimants affleure la périphérie interne de la couronne.
De la même façon, les aimants (6) sont fixés dans des logements formés à la périphérie du support (7).

De ce qui précède, l'utilisation d'aimants "boutons", sous forme de pastilles permet de réaliser le frein sur des pièces existantes par simple perçage de la bride du moteur. La matière de la bride du moteur, généralement de l'aluminium ou du zamak, voire un composé en matière plastique convient parfaitement. L'invention permet de s'affranchir de la nécessité de magnétiser des pièces du moteur, qui impliquerait l'usinage de couronnes concentriques dédiées à cet usage dans un matériau approprié magnétisable et onéreux, puis la réalisation d'un outil électrique spécifique générateur de champ magnétique pour magnétiser lesdites pièces. La présente invention est rapide, simple et peu onéreuse à mettre en œuvre. Après montage du support (7) sur la portée (1a) de l'arbre (1), à l'intérieur de la couronne (1a), l'entrefer entre les aimants (5) et (6) est de l'ordre de 0,5 mm.

Selon d'autres caractéristiques, les aimants (5) et (6) sont disposés en opposition de pôles, ce qui permet d'augmenter l'efficacité du frein a champ magnétique égal
Par exemple, les pôles nord des aimants (5), que présente la couronne (4a), s'opposent aux pôles nord des aimants (6), que présente le support (7). Ou bien, les pôles sud des aimants (5), que présente la couronne (4a), s'opposent aux pôles sud des aimants (6), que présente le support (7).

Selon une autre caractéristique, les aimants (5) de la couronne (4a), et les aimants (6) du support (7), disposés les uns et les autres radialement par rapport à l'arbre (1), sont décalées angulairement sur une circonférence. Le nombre d'aimants (5) de la couronne (4a) est supérieur au nombre d'aimants (6) du support (7), sans pour cela exclure des nombres égaux entre les aimants (5) et (6).

Dans la forme de réalisation illustrée, le nombre d'aimants (5) de la couronne (4a) est deux fois supérieure au nombre d'aimants (6) du support (7).
Dans l'exemple illustré aux figures des dessins, la couronne (4a) présente six aimants décalés de 60°, tandis que le support (7) présente trois aimants décalés de 120°.

À noter que lorsque l'application nécessite un frein de faible valeur, le support (7), comme le montrent les figures des dessins, peut présenter une forme géométrique globalement triangulaire incorporant trois aimants, par exemple par surmoulage, sans pour cela exclure d'autres formes géométriques.

La bride du moteur usinée en couronne reçoit alors quatre aimants. Pour obtenir un frein plus efficace, l'emploi d'un disque muni d'autant d'aimants que le diamètre le permet peut être combiné avec la bride du moteur usinée en couronne et recevant un aimant supplémentaire par rapport au disque.

L'invention trouve une application très avantageuse pour les tambours d'enroulement des volets de couverture de piscine, sans pour cela exclure d'autres applications où il est nécessaire de connaître la position angulaire d'un axe motorisé, et de le maintenir dans cette position, sans aucune contrainte axiale.

Les avantages ressortent bien de la description, en particulier, on souligne et on rappelle la disposition radiale des aimants par rapport à l'arbre motorisé, évitant d'avoir une composante de poussée axiale. De plus, sans aucune autre modification mécanique, le simple choix d'aimants sous forme de pastilles avec une force d'adhérence plus importante ou plus faible selon le besoin, permet d'obtenir un frein capable de générer un couple de maintien dans un plage de 1 à 10 sans aucun investissement spécifique.

## Revendications

1. Motoréducteur d'enroulement et de déroulement d'un volet de couverture d'un bassin de piscine, alimenté électriquement, comprenant un arbre (1) monté tournant dans une carcasse tubulaire fixe (2), au moyen de deux paliers (3) montés dans deux flasques (4) solidaires de chaque extrémité transversale de ladite carcasse (2), motoréducteur dans lequel au moins l'un des flasques (4) est agencé directement, ou d'une manière rapportée, pour constituer une couronne circulaire (4a) disposée concentriquement à l'arbre (1), et la couronne circulaire (4a) présente périphériquement des aimants (5) orientés radialement par rapport audit arbre (1), les aimants (5) sont aptes à coopérer avec des aimants (6) orientés également radialement par rapport à l'arbre (1) et portés périphériquement par un organe support (7) solidaire dudit arbre (1), de façon à éviter une composante de poussée axiale, **caractérisé *en ce que*** les aimants (5) de la couronne (4a) sont en opposition de pôles par rapport aux aimants (6) du support (7), avec:
- soit les pôles nord des aimants (5) de la couronne (4a) s'opposent aux pôles nord des aimants (6) du support (7) ;
- soit les pôles sud des aimants (5) de la couronne (4a) s'opposent aux pôles sud des aimants (6) du support (7) ; ***et en ce que*** lesdits aimants (5) et (6) se présentent sous la forme de pastilles cylindriques fixées respectivement dans des ouvertures débouchantes formées dans l'épaisseur de la couronne (4a) et dans des logements formés à la périphérie du support (7) de sorte à assurer le maintien et l'arrêt de l'arbre (1) avec un couple de même valeur que celui du motoréducteur, après avoir coupé l'alimentation électrique dudit motoréducteur.

2. Motoréducteur selon la revendication 1, ***caractérisé* en ce que** les aimants (5) de la couronne (4a) et les aimants (6) du support (7) sont régulièrement décalés angulairement sur une circonférence.

3. Motoréducteur selon la revendication 2, ***caractérisé* en ce que** le nombre d'aimants (5) de la couronne (4a) est supérieur au nombre d'aimants (6) du support (7).

4. Motoréducteur selon la revendication 2, ***caractérisé* en ce que** le nombre d'aimants de la couronne (4a) est deux fois supérieur au nombre d'aimants (6) du support (7).

5. Motoréducteur selon la revendication 4, ***caractérisé* en ce que** la couronne (4a) présente six aimants (5) décalés de 60°, tandis que le support (7) présente trois aimants (6) décalés de 120°.

6. Motoréducteur selon la revendication 1, ***caractérisé* en ce que** le support (7) a une forme globalement triangulaire.

## Patentansprüche

1. Getriebemotor zum Ein- und Ausrollen der Abdeckung eines Schwimmbades, mit Stromversorgung, mit einer Welle (1), drehbar montiert in einem festen, rohrförmigen Gehäuse (2), mittels zwei Lagern (3), montiert in zwei Flanschen (4), die fest mit jedem Quer-Endstück dieses Gehäuses (2) verbunden sind, ein Getriebemotor in dem mindestens einer der Flansche (4) direkt oder angesetzt angeordnet ist, um so einen ringförmigen Kranz (4a) zu bilden, der konzentrisch zur Welle (1) angeordnet ist, und der ringförmige Kranz (4a) weist an seiner Peripherie Magnete (5) auf, die auf diese Welle (1) bezogen, radial angeordnet sind, diese Magnete (5) können mit, ebenfalls auf diese Welle (1) bezogen, radial angeordneten Magneten (6) zusammenwirken, die an der Peripherie von einem Halteorgan (7) gehalten werden, das mit der Welle (1) fest verbunden ist, so dass eine Axialschub-Komponente vermieden wird,
***dadurch gekennzeichnet, dass*** die Magnete (5) des Kranzes (4a) entgegengesetzte Pole zu den Magneten (6) des Halters (7), haben, wobei:
entweder die Nordpole der Magnete (5) des Kranzes (4a) den Nordpolen der Magnete (6) des Halters (7) entgegenarbeiten;
oder die Südpole der Magnete (5) des Kranzes (4a) gegen die Südpole der Magnete (6) des Halters (7) arbeiten;
***und dass*** diese Magnete (5) und (6) die Form zylinderförmiger Plättchen haben, die jeweils in einmündenden Öffnungen befestigt sind, die in der Dicke des Kranzes (4a) gebildet sind, sowie in Aussparungen, die an der Peripherie des Halters (7) gebildet sind, so dass der Halt und das Anhalten der Welle (1) gewährleistet sind mit einem Moment mit demselbenWert, wie das des Getriebemotors, nach dem Abschalten der Stromversorgung dieses Getriebemotors.

2. Getriebemotor nach Anspruch 1, ***dadurch gekennzeichnet, dass*** die Magnete (5) des Kranzes (4a) und die Magnete (6) des Halters (7) regelmäßig, im Winkel, auf der Peripherie versetzt sind.

3. Getriebemotor nach Anspruch 2, ***dadurch gekennzeichnet, dass*** die Zahl der Magnete (5) des Kranzes (4a) höher ist als die Zahl der Magnete (6) des Halters (7).

4. Getriebemotor nach Anspruch 2, ***dadurch gekennzeichnet, dass*** die Zahl der Magnete (5) des Kranzes (4a) doppelt so hoch ist, wie die Anzahl der Magnete (6) des Halters (7).

5. Getriebemotor nach Anspruch 4, ***dadurch gekennzeichnet, dass*** der Kranz (4a) sechs, um 60° versetzte Magnete (5) aufweist, während der Halter (7) drei, um 120° versetzte Magnete (6) aufweist.

6. Getriebemotor nach Anspruch 1, ***dadurch gekennzeichnet, dass*** der Halter eine global dreieckige Form hat.

## Claims

1. A gear motor for rolling up and unrolling a shutter for covering a swimming pool, which gear motor is electrically powered and includes a shaft (1) mounted to turn in a stationary tubular structure (2), by means of two bearings (3) mounted in respective ones of two flange plates (4) that are secured to respective ones of the two transverse ends of said structure (2), in which gear motor at least one of the flanges (4) is arranged, in directly integral manner or in separately mounted manner, to constitute a circular ring (4a) disposed concentrically with the shaft (1), and the circular ring (4a) is provided peripherally with magnets (5) that are oriented radially relative to said shaft (1), the magnets (5) being suitable for co-operating with magnets (6) that are also oriented radially relative to the shaft (1) and that are carried peripherally by a support member (7) that is secured to said shaft (1), in such a manner as to avoid any axial thrust component, said gear motor being ***characterized in that*** the magnets (5) on the ring (4a) are of opposing poles relative to the magnets (6) on the support (7), with:
- either the north poles of the magnets (5) on the ring (4a) opposing the north poles of the magnets (6) on the support (7);
- or the south poles of the magnets (5) on the ring (4a) opposing the south poles of the magnets (6) on the support (7);
*and **in that*** said magnets (5) and (6) are in the shape of cylindrical buttons fastened in respective ones of through openings formed through the thickness of the ring (4a) and in recesses formed at the periphery of the support (7) so as to hold and to stop the shaft (1) with torque of the same value as the torque of the gear motor, after the electrical power supply of said gear motor has been switched off.

2. A method according to claim 1, ***characterized in that*** the magnets (5) on the ring (4a) and the magnets (6) on the support (7) are uniformly spaced apart angularly over a circumference.

3. A gear motor according to claim 2, ***characterized in that*** the number of magnets (5) on the ring (4a) is greater than the number of magnets (6) on the support (7).

4. A gear motor according to claim 2, ***characterized in that*** the number of magnets on the ring (4a) is twice the number of magnets (6) on the support (7).

5. A gear motor according to claim 4, ***characterized in that*** the ring (4a) has six magnets (5) spaced apart by 60°, while the support (7) has three magnets (6) spaced apart by 120°.

6. A gear motor according to claim 1, ***characterized in that*** the support (7) is of substantially triangular shape.
